# EUROPÄISCHE PATENTANMELDUNG

(11) **EP 1 160 220 A1**
(43) Veröffentlichungstag der Anmeldung: **05.12.2001**
(21) Anmeldenummer: 01112518.4
(22) Anmeldetag: 23.05.2001
(51) Int. Cl.: C04B 24/06, C04B 22/06, C04B 28/02

(54) **Zusatz für beschleunigte Systeme**

(30) Priorität: 26.05.2000 DE 10025763
(71) Anmelder: ED. ZÜBLIN AG, D-70567 Stuttgart (DE)
(72) Erfinder: Dölle, Torsten, 06766 Wolfen (DE)

(57) **Zusammenfassung**

Es wird ein Zusatz für beschleunigte Systeme insbesondere Spitzmörtel und -beton angegeben, durch den das Erstarrungsverhalten stark verbessert werden kann.
Der Zusatz besteht aus einer löslicher Kalkverbindung und einem Hydroxycarbonsäure oder Polycarbonsäure bzw. einen Salz der genannten Säuren.

## Beschreibung

### Technisches Gebiet

Die Erfindung betrifft mit Beschleunigern beschleunigte Systeme, insbesondere Spritzmörtel und -beton.

### Stand der Technik

Spritzbetone, insbesondere Naßspritzbetone werden i.d.R. mit portlandzementhaltigen Bindemitteln (z.B. Zementen nach DIN 1164/10.94 bzw. EN 197) hergestellt und durch aluminiumhaltige Verbindungen (u.a. Alkalialuminate, Aluminiumsulfate, Aluminiumhydroxide) beschleunigt. Die erreichbare Erstarrungsbeschleunigung ist dabei stark abhängig von den Eigenschaften des Zements, vom w/z-Wert (Wasser/Zement Verhältnis), von der Temperatur des Bereitstellungsgemisches und der Umgebung.
Die verschiedenen Zemente unterscheiden sich in ihrer Eignung für den Einsatz im Spritzbeton deutlich. Es stehen allerdings nicht immer regional geeignete Zemente zur Verfügung. Hinzu kommt, daß sich auch herstellungsbedingte Schwankungen innerhalb eines Zementes deutlich auf das Erstarrungsverhalten auswirken.
Der Wassergehalt und der w/z-Wert haben einen extremen Einfluss auf das Erstarrungsverhalten beschleunigter Systeme. In der Praxis müssen deshalb beim Spritzbeton i.a. w/z-Werte unter 0,5 eingehalten werden. Dies bedeutet, das z.T. sehr hohe Zementgehalte von bis zu 450 kg/m³ eingesetzt werden, was gleichzeitig entsprechend hohe Beschleunigermengen bedingt. Schwankungen der Temperaturen bewirken in der Baustellenausführung immer starke Veränderungen der notwendigen Beschleunigerdosierung und der entsprechend erreichbaren Beschleunigung. Dies führt vor allem in den Wintermonaten oft zu Problemen, beispielsweise beim Vortrieb mit Spritzbeton im Tunnelbau. Dabei ist oft die erreichbare Beschleunigung trotz des Einsatzes von höheren Beschleunigermengen deutlich geringer.
Die WO 97 / 45379 beschreibt einen Trockenspritzbeton, der aus Sulfoaluminatzementklinker oder Tonerdezementklinker, Gips, Kalk, gewissen organischen und/oder anorganischen Säuren und einer Auswahl von möglichen Salzen besteht. In der Beschreibung dieser Anmeldung (S. 7, Z. 1-3) wird dabei aufgeführt, daß Kalk in Verbindung mit normalen Spritzbetonen von Nachteil ist und aus diesem Grund bei diesen maximal zu 0,5 % eingesetzt wird.

### Aufgabe der Erfindung

Aufgabe der Erfindung ist es, beschleunigte Systeme durch geeignete Zusätze unempfindlicher gegen produktionsbedingte Schwankungen der Zementeigenschaften, des w/z-Wertes und Schwankungen der Temperatur zu machen und zusätzlich das Ansteifverhalten zu verbessern und so die notwendige Beschleunigerdosierung deutlich zu reduzieren. Weiterhin sollen Zemente, die für beschleunigte Systeme nicht geeignet sind, für eine solche Anwendung ertüchtigt werden.

### Darstellung der Erfindung

Es wurde überraschenderweise gefunden, dass durch den teilweisen Ersatz des Zements durch eine Zusatzkombination gemäß Anspruch 1, welche eine Ilösliche, bevorzugt basische Kalkverbindung und eine Hydroxycarbonsäure oder Polycarbonsäure bzw. ein Salze der genannten Saüren enthält, die Aufgabe hervorragend gelöst werden kann.
Als Kalkverbindungen eignen sich insbesondere Brandkalk und Löschkalk bzw. Mischungen aus beiden. Die Wirksamkeit kann durch den Zusatz von Calciumsulfat erhöht werden. Die Dosiermenge der kalkhaltigen Komponente liegt zwischen 0,1% und 25%, vorzugsweise zwischen 2% und 8%.
Als zweite Komponente sind Hydroxycarbonsäuren wie beispielsweise Salicyl-, Milch-, Wein- und Zitronensäure und Polycarbonsäuren wie Malein-, Bernstein- und Fumarsäure geeignet. Die Dosiermenge der Komponente liegt zwischen 0,01% und 5%, vorzugsweise zwischen 0,1% und 1,8%.

Die Erfindung wird anhand der folgenden Beispiele genauer erläutert. Als Bereitstellungsgemisch wurde ein Zementleim (ZL) mit einer Vorlagerungszeit von 30 Minuten gewählt. Als kalkhaltige Komponente wurde Löschkalk und als zweite Komponente ein handelsübliches Zusatzmittel (ZM) auf Basis einer Tricarbonsäure (z.B. Phosphonobutantricarbonsäure) zugegeben. Nach der Vorlagerungszeit wurde ein handelsüblicher flüssiger, alkalihaltiger Beschleuniger (BE) in unterschiedlichen Dosierungen (BE%) zugesetzt und das Erstarrungsende (EE) mit der Vicatnadel bestimmt. Die Angabe erfolgt in Minuten (00:00). Der Beschleunigungsendwert (BEW) ist erreicht, wenn die Erstarrungszeit durch eine erhöhte BE-Dosierung nicht weiter verkürzt werden kann. Er ist ein Mass für die maximal erreichbare Beschleunigung.

| Zusammensetzung des Bereitstellungsgemisch | | | | |
|---|---|---|---|---|
| Bestandteile des Bereitstellungsgemisches | ZL | ZL + Kalk | ZL + ZM | ZL + Kalk + ZM |
| Portlandzement | 250 g | 242,5 g | 250 g | 242,5 g |
| Löschkalkgebrannter Kalk | 0 g | 7,5 g | 0 g | 7,5 g |
| Zusatzmittel ZM | 0 g | 0 g | 1,25 g | 1,25 g |
| Wassergehalt wurde entsprechend dem angegebenen w/z-Wert gewählt | | | | |

| Beispiel A - Vergleich von unterschiedlichen Zementen - w/z-Wert = 0,5 | | | | | | | | |
|---|---|---|---|---|---|---|---|---|
| | ZL | | ZL + Kalk | | ZL + ZM | | ZL + Kalk + ZM | |
| | EE | BE% | EE | BE% | EE | BE% | EE | BE% |
| Zement A | 16:00 | 11% | 15:30 | 10% | 13:30 | 9% | 9:30 | 5% |
| BEW | 12:30 | | 12:00 | | 10:30 | | 3:00 | |
| Zement B | 10:00 | 9% | 13:00 | 7% | 9:30 | 7% | 10:00 | 4% |
| BEW | 8:00 | | 7:00 | | 6:15 | | 2:00 | |

Es zeigt sich:
1. Zemente unterscheiden sich im Hinblick auf die Beschleunigung durch Beschleuniger deutlich. Der Zement A verhält sich ungünstiger als der Zement B.
2. Durch den Zusatz der Einzelkomponenten kann die Leistungsfähigkeit der Zemente leicht verbessert werden, die Unterschiede untereinander bleiben jedoch bestehen.
3. Durch die Kombination der Zusätze wird bei beiden Zementen eine entscheidende (nichtlineare sondern exponentielle!) Verbesserung des Beschleunigungsverhaltens erzielt. Die Dosiermenge kann um mehr als die Hälfte gesenkt werden. Die maximale Beschleunigung ist wesentlich grösser, als bei den anderen Systemen. Der BEW lässt sich auf ein Viertel gegenüber dem zusatzfreien System verkürzen.
4. Damit wird deutlich das durch einen Kombinationszusatz die Zemente in ihrer Leistungsfähigkeit sehr gut angepasst werden können.

| Beispiel B - Einfluss des w/z-Werts | | | | | | | | |
|---|---|---|---|---|---|---|---|---|
| w/z-Wert | ZL | | ZL + Kalk | | ZL + ZM | | ZL + Kalk + ZM | |
| | EE | BE% | EE | BE% | EE | BE% | EE | BE% |
| 0,5 | 16:00 | 11% | 15:30 | 10% | 13:30 | 9% | 9:30 | 5% |
| BEW | 12:30 | | 12:00 | | 10:30 | | 3:00 | |
| 0,35 | 11:00 | 4% | 9:00 | 4% | 4:00 | 4% | 2:30 | 4% |
| BEW | 4:00 | | 3:30 | | 2:30 | | 1:00 | |

Es zeigt sich:
1. Der w/z-Wert spielt eine dominierende Rolle bei der Beschleunigung, der BE-Bedarf steigt mit steigendem w/z-Wert überproportional und die erreichbare Beschleunigung nimmt stark ab.
2. Die Zugabe von nur einzelnen Komponenten bewirkt lediglich eine unwesentliche Verbesserung.
3. Bei der Zugabe beider Komponenten ist der Einfluss des w/z-Wertes auch deutlich, aber ist wesentlich schwächer ausgeprägt. Die Leisungsfähigkeit mit dem Kombinationszusatz bei dem hohen w/z-Wert entspricht der Leistungsfähigkeit des Systems ohne Zusätze bei dem niedrigen w/z-Wert.
4. Damit wird deutlich, beschleunigte Systeme mit einem Kombinationszusatz sind unempfindlich gegen Schwankungen des w/z-Wertes und es können somit auch Bereitstellungsgemische mit höheren w/z-Werten ausreichend beschleunigt werden. Es tritt eine nicht vorhersagbare nichtlineare Verbesserung der Beschleunigung des Systems auf!

| Beispiel C - Einfluss der Temperatur | | | | | | | | |
|---|---|---|---|---|---|---|---|---|
| w/z-Wert | ZL | | ZL + Kalk | | ZL + ZM | | ZL + Kalk + ZM | |
| | EE | BE% | EE | BE% | EE | BE% | EE | BE% |
| 25°C | 10:00 | 9% | 13:00 | 7% | 9:30 | 7% | 4:00 | 5% |
| 10°C | 22:00 | 9% | 35:00 | 7% | 14:00 | 7% | 5:30 | 5% |

Es zeigt sich:
1. Niedrige Temperaturen bewirken einen starken Abfall der Beschleunigungswirkung.
2. Der Zusatz ZM kann dieses Phänomen etwas dämpfen.
3. Der kombinierte Zusatz schwächt den Einfluss der Temperatur deutlich ab, (und dies, obwohl Kalk allein ihn sogar eher verstärkt!). Die Erstarrungszeiten werden nur unwesentlich erhöht. Die Beschleunigung ist trotz der niedrigen Temperatur und der geringeren Dosiermenge stärker als bei den anderen Systemen und der hohen Temperatur.
4. Damit zeigt sich, das durch den Kombinationszusatz der Einfluss der Temperatur minimiert werden kann und so auch im Winter Bereitstellungsgemische ausreichend beschleunigt werden können. Dieser Effekt ist wiederum aus den Effekten der Einzelkomponenten nicht vorhersagbar!

Die dargestellten Phänomene treffen in gleicher und teilweise sogar noch verstärkter Form auch für alkalifreie Beschleuniger zu.

## Patentansprüche

1. Zusatz für Bereitstellungsgemische für beschleunigte Systemen mit portlandzementhaltigen Bindemitteln (z.B. Zementen nach DIN 1164/10.94 bzw. EN 197), die mit einem Beschleuniger beschleunigt werden,
**dadurch gekennzeichnet, daß** der Zusatz aus einer Komponente A und einer Komponente B besteht, wobei die Komponente A einen löslichen, bevorzugt basischen Kalkträger enthält und die Komponente B eine Hydroxycarbonsäure oder eine Polycarbonsäure bzw. ein Salz der genannten Säuren enthält.

2. Zusatz für portlandzementhaltige Bindemittel (z.B. Zemente nach DIN 1164/10.94 bzw. EN 197),
**dadurch gekennzeichnet, daß** der Zusatz aus einer Komponente A und einer Komponente B besteht, wobei die Komponente A einen löslichen, bevorzugt basischen Kalkträger enthält und die Komponente B eine Hydroxycarbonsäure oder eine Polycarbonsäure bzw. ein Salz der genannten Säuren enthält.

3. Zusatz nach Anspruch 1 oder Anspruch 2,
**dadurch gekennzeichnet, daß** das Bereitstellungsgemisch ein Naßgemisch für Naßspritzbeton ist.

4. Zusatzkombination nach mindestens einem der Ansprüche 1 bis 3,
**dadurch gekennzeichnet, dass** die kalkhaltige Komponente Branntkalk ist.

5. Zusatz nach mindestens einem der Ansprüche 1 bis 4,
**dadurch gekennzeichnet, dass** die kalkhaltige Komponente Löschkalk ist.

6. Zusatz nach mindestens einem der Ansprüche 1 bis 5,
**dadurch gekennzeichnet, dass** die kalkhaltige Komponente gemahlener Portlandzementklinker ist.

7. Zusatz nach mindestens einem der Ansprüche 1 bis 6,
**dadurch gekennzeichnet, dass** der Zusatz ein Calciumsulfat enthält.

8. Verfahren zur Verwendung der Zusatzkombination nach mindestens einem der Ansprüche 1 bis 7,
**dadurch gekennzeichnet, daß** ein Bereitstellungsgemisch verwendet wird, welches ein Trockengemisch mit trockenen oder erdfeuchten Zuschlägen für Trockenspritzbeton ist, und daß diesem der Beschleuniger während der Herstellung des Bereitstellungsgemisches zugegeben wird.

9. Verfahren zur Verwendung der Zusatzkombination nach mindestens einem der Ansprüche 1 bis 7,
**dadurch gekennzeichnet, daß** ein Bereitstellungsgemisch verwendet wird, welches ein Trockengemisch mit trockenen oder erdfeuchten Zuschlägen für Trockenspritzbeton ist, und daß diesem der Beschleuniger während der Verarbeitung des Bereitstellungsgemisches zugegeben wird.

10. Verfahren nach mindestens einem der Ansprüche 8 und 9,
**dadurch gekennzeichnet, dass** ein alkalihaltiger Beschleuniger verwendet wird.

11. Verfahren nach mindestens einem der Ansprüche 8 und 9,
**dadurch gekennzeichnet dass**, dass ein alkalifreier Beschleuniger verwendet wird.
